# EUROPEAN PATENT APPLICATION

(11) **EP 4 488 454 A1**
(43) Date of publication of application: **08.01.2025**
(21) Application number: 23763746.7
(22) Date of filing: 03.03.2023
(51) Int. Cl.: E02F 9/20, E02F 3/43, E02F 9/22

(54) **SYSTEM FOR CONTROLLING CONSTRUCTION MACHINE, AND METHOD FOR CONTROLLING SAME**

(30) Priority: 03.03.2022 KR 20220027498
(71) Applicant: HD Hyundai Infracore Co., Ltd., Incheon 22502 (KR)
(72) Inventor: HYUN, Dongchan, Incheon 22741 (KR); OH, Jinhyuk, Incheon 22735 (KR); SHIN, Jonghwan, Bucheon-si, Gyeonggi-do 14508 (KR)
(74) Representative: Isarpatent
(86) International application number: PCT/KR2023/002953
(87) International publication number: WO 2023/167548

(57) **Abstract**

The present invention relates to a system for controlling a construction machine and a method for controlling the same, and the system comprising: a bucket control valve which controls the supply of hydraulic oil to a bucket cylinder provided to operate a bucket; a vehicle control unit which controls the bucket control valve by applying a current value to the bucket control valve; a pilot cutoff switch which controls the cutoff of pilot oil pressure controlling the driving or operation of a vehicle and transmits the cutoff to the vehicle control unit; and a bucket joystick which receives a signal from an operator and transmits the signal to the vehicle control unit.

## Description

### [TECHNICAL FIELD]

The present disclosure relates to a control system for a construction machine and a control method thereof, and more specifically, to a control system for a construction machine and a control method thereof for operating the construction machine to remove residues remaining in a bucket after work of the construction machine.

### [BACKGROUND ART]

A construction machine such as a wheel loader is widely used for transporting or loading soil. More specifically, the wheel loader transports soil to a position close to a transportation means such as a truck, raises the boom, and then full dumps the bucket to drop the soil onto the transportation means.

Then, the wheel loader sets the bucket again to the return to dig position, lowers the boom, moves to the place where the soil is piled up, loads the soil into the bucket, and adjusts the bucket to the full crowd position. This operation is repeated multiple times until the soil is filled in the transportation means, and the wheel loader operator should perform this operation repeatedly.

Meanwhile, residue of soil remains in the bucket of the wheel loader after work is completed. Conventionally, when there is residue in the bucket, the operator uses the bucket joystick to repeat dump and crowd operations to remove the residue from the bucket.

However, the manipulation of the bucket joystick every time residue is in the bucket causes discomfort and fatigue for the operator.

### [DETAILED DESCRIPTION OF INVENTION]

### [TECHNICAL PROBLEMS]

The present disclosure provides a control system for a construction machine and a control method thereof that when a residue remains in a work tool after work of the construction machine, can control the construction machine to perform an operation of shaking off the residue in the work tool by simply inputting a signal through a joystick that operates the work tool.

### [TECHNICAL SOLUTION]

In accordance with one embodiment of the present disclosure, a control system for a construction machine comprises: a bucket control valve for controlling supply of hydraulic oil to a bucket cylinder provided to operate a bucket; a vehicle control unit that applies a current value to the bucket control valve to control the bucket control valve; a bucket joystick that transmits a bucket control signal to the vehicle control unit and includes a switch for actuating the bucket or a device other than the bucket; an arm position detection unit that detects a position of an arm connecting the bucket and a vehicle and transmits the position of the arm to the vehicle control unit; and a bucket position detection unit that detects a position of the bucket and transmits the position of the bucket to the vehicle control unit, wherein the vehicle control unit performs bucket dusting when receiving a specific signal from the switch in a state in which the position of the arm is at or above a first set position, the position of the bucket is at or below a second set position, and the bucket joystick is in a neutral state.

Further, before performing the bucket dusting, the vehicle control unit switches the vehicle to a standby state in which the bucket dusting is practicable when receiving the specific signal from the switch.

Further, the control system further comprises a pilot cut-off switch for controlling cut-off of pilot oil pressure that controls driving or operation of the vehicle, wherein the vehicle control unit switches the vehicle to a standby state in which the bucket dusting is practicable only when the pilot cut-off switch is in an off state.

Further, the vehicle control unit switches the vehicle to a standby state in which the bucket dusting is practicable only when function of the switch that drives the device other than the bucket is in a deactivated state.

Further, the control system further comprises an instrument panel that displays a pop-up notifying that the vehicle has been switched to a standby state in which the bucket dusting is practicable.

Further, the control system further comprises a vehicle speed sensor that detects a speed of the vehicle and transmits the speed of the vehicle to the vehicle control unit, wherein when the speed of the vehicle is equal to or less than a set speed, the vehicle control unit performs the bucket dusting when receiving the specific signal from the switch.

Further, when the bucket is positioned within a range below the second set position and above a third set position, the vehicle control unit performs the bucket dusting when receiving the specific signal from the switch.

Further, the second set position or the third set position may be set by a user.

Further, the vehicle control unit applies a set output value to cause the bucket performs a crowd operation when the bucket is positioned at or below a third set position lower than the second set position.

In accordance with another embodiment of the present disclosure, a control method of a control system for a construction machine comprises: receiving status information of a pilot cut-off switch; and receiving a specific signal from a bucket joystick, wherein a vehicle is switched to a standby state in which bucket dusting is practicable when the pilot cut-off switch is in an off state and the specific signal transmitted by the bucket joystick is input.

Further, the control method further comprises a verification step for performing the bucket dusting when the vehicle is switched to the standby state, wherein the verification step for performing the bucket dusting includes: performing the bucket dusting according to a position of a bucket when a position of an arm of the construction machine is at or above a first set position, the position of the bucket is at or below a second set position, the bucket joystick is in a neutral state, and a speed of the vehicle is equal to or less than a set speed.

Further, the position of the bucket is detected before the performing of the bucket dusting, and the bucket alternately performs dump operation and crowd operation a set number of times at intervals of a set time when the bucket is positioned within a range below the second set position and above a third set position.

Further, the position of the bucket is detected before the performing of the bucket dusting, and the bucket performs the crowd operation when the bucket is positioned at or below the third set position.

Further, the position of the bucket is detected after the bucket performs the crowd operation, and the bucket alternately performs the dump operation and the crowd operation a set number of times at intervals of a set time when it is confirmed that the position of the bucket has changed to fall within the range below the second set position and above the third set position.

Further, the position of the bucket is detected after the bucket performs the crowd operation, and whether the crowd operation has been repeated a set number of times is determined when it is confirmed that the position of the bucket is maintained at or below the third set position.

Specific details of other embodiments are included in the detailed description and drawings.

### [EFFECT OF INVENTION]

The control system for the construction machine and the control method thereof, according to the present disclosure, have the following effects.

First, when the residue in the bucket needs to be removed, simply inputting a signal through the button on the bucket joystick allows the bucket to repeat dump and crowd operations to shake off the residue.

Second, the operator does not have to manually operate the bucket joystick for the dump and crowd operations of the bucket while shaking off residue from the bucket, which reduces the operator's fatigue.

### [BRIEF DESCRIPTION OF THE DRAWING]

FIG. 1 is a block diagram showing the configuration of a control system for a construction machine according to one embodiment of the present disclosure.
FIG. 2 is a front view showing a bucket joystick of the construction machine according to FIG. 1.
FIGS. 3A to 3C are partial front views showing the operating states of a bucket of the construction machine according to FIG. 1.
FIGS. 4 and 5 are block diagrams showing a control method of a construction machine control system according to one embodiment of the present disclosure.
FIG. 6 is a graph showing signals output to a valve when the bucket operates according to the present disclosure.

### [BEST MODE FOR CARRYING OUT THE INVENTION]

Hereinafter, with reference to the accompanying drawings, embodiments of the present disclosure will be described in detail so that one having ordinary skill in the art to which the present disclosure pertains can easily implement the embodiments. The present disclosure may be implemented in many different forms and is not limited to the embodiments described herein.

It is noted that the drawings are schematic and not drawn to scale. The relative dimensions and proportions of parts in the drawings are shown exaggerated or reduced in size for clarity and convenience in the drawings, and any dimensions are illustrative only and are not definitive. Further, the same reference numerals are used for the same structural elements or parts appearing in more than one drawing to indicate similar features.

The embodiments of the present disclosure specifically represent ideal embodiments of the present disclosure. As a result, various variations of the illustrations are expected. Accordingly, the embodiments are not limited to the specific shape of the illustrated area and also include changes in shape due to manufacturing, for example.

Before describing specific embodiments of a control system for a construction machine according to the present disclosure, the construction machine will be defined as a wheel loader. The present disclosure is a control system for a construction machine capable of performing bucket dusting to remove residues when residues remain in the bucket of the wheel loader.

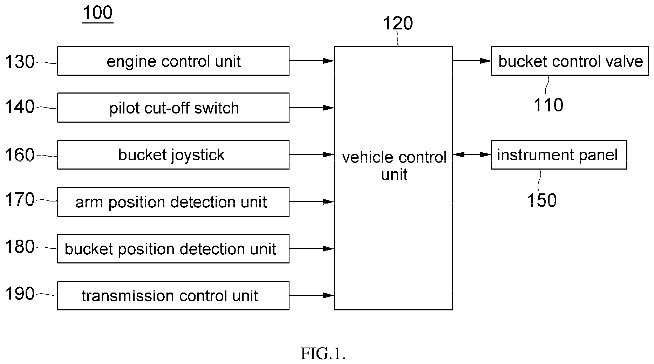

Hereinafter, a control system for a construction machine according to the present disclosure will be described with reference to FIGS. 1 to 3.

First, a control system 100 for a construction machine according to one embodiment of the present disclosure includes a bucket control valve 110, a vehicle control unit 120, a pilot cut-off switch 140, and a bucket joystick 160. It may further include an engine control unit 130 and an instrument panel 150.

The bucket control valve 110 controls the supply of hydraulic oil to a bucket cylinder 30 provided to operate a bucket 10. The bucket 10 is a means used to move materials such as soil when the construction machine is in operation. The bucket 10 is connected to a vehicle (not shown) of the construction machine by an arm 20.

The bucket 10 and the arm 20 are hingedly connected so that the bucket 10 can be rotated to perform dump and crowd operations with respect to the arm 20. Specifically, the bucket 10 may be rotated in response to piston action of the bucket cylinder 30. The bucket cylinder 30 may perform the piston action by hydraulic oil supplied to the bucket cylinder 30.

The bucket control valve 110 is an electromagnetic proportional control valve (EPPR valve). Therefore, the bucket control valve 110 controls the supply of hydraulic oil to the bucket cylinder (not shown) according to an output value applied to the bucket control valve 110.

The vehicle control unit 120 serves to control the bucket control valve 110. Specifically, the vehicle control unit 120 applies a current value that allows the bucket control valve 110 to supply operating oil to the bucket cylinder 30.

The bucket control valve 110 supplies operating oil to the dump side or crowd side of the bucket cylinder 30 in response to the current value applied by the vehicle control unit 120. The bucket 10 performs a dump operation or a crowd operation depending on where the hydraulic oil is supplied in the bucket cylinder 30.

As will be described in more detail later, in the present embodiment, when bucket dusting is performed, the bucket control valve 110 may supply hydraulic oil alternately to the dump side and the crowd side, or only to the crowd side.

In the present embodiment, the vehicle control unit 120 applies an output value to the bucket control valve 110 for bucket dusting based on conditions transmitted from the engine control unit 130, the pilot cut-off switch 140, and the instrument panel 150, and the bucket joystick 160. This will be described in more detail later.

The engine control unit 130 controls starting of the vehicle (not shown) and transmits to the vehicle control unit 120 whether the vehicle (not shown) is started or not. In other words, the engine control unit 130 informs the vehicle control unit 120 whether the vehicle of the wheel loader is in a started state or not.

The pilot cut-off switch 140 controls the cut-off of pilot hydraulic pressure that controls driving or work of a vehicle (not shown). That is, the pilot cut-off switch 140 may output an operation signal to block the supply of pilot hydraulic oil.

When the pilot cut-off switch 140 is in the on state, various control valves using the pilot hydraulic oil lose their functions. On the other hand, when the pilot cut-off switch 140 is in the off state, the pilot hydraulic oil is supplied to various control valves.

The pilot cut-off switch 140 controls the cut-off of pilot hydraulic pressure and transmits the operation status of the pilot cut-off switch 140 to the vehicle control unit 120.

The bucket joystick 160 is used to manipulate the operation of the bucket 10. The bucket joystick 160 transmits a bucket control signal to the vehicle control unit 120. The bucket joystick 160 includes a switch that operates the bucket 10 or a device other than the bucket 10. An operator may control the dump operation and the crowd operation of the bucket 10 by manipulating the bucket joystick 160.

The vehicle control unit 120 switches the vehicle to a standby state for bucket dusting operation when it confirms that the pilot cut-off switch 140 is in the off state and a specific signal transmitted by the switch of the bucket joystick 160 is input.

In this case, the specific signal transmitted by the switch of the bucket joystick 160 may be in various forms depending on the setting, such as a signal lasting longer than a set time or a signal that is periodically repeated for a certain period of time. In the present embodiment, the specific signal is a signal lasting longer than the set time, and it will be described as a signal lasting longer than the set time hereinafter.

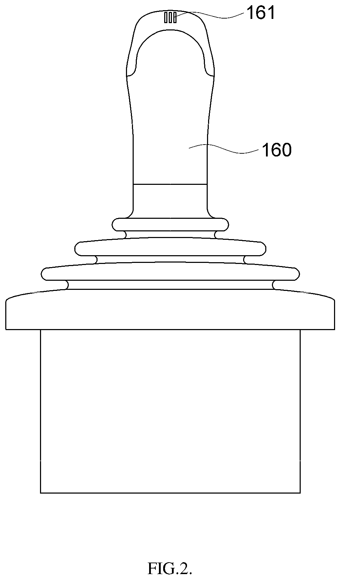

The operator may select the status of the 4^{th} spool option through the instrument panel 150 to execute bucket dusting. As will be described in more detail later, the 4^{th} spool option operation and the bucket dusting operation are operated through the same input means. The bucket dusting is performed by the operator pressing a button 161 provided on the bucket joystick 160 (see FIG. 2). The 4^{th} spool option is also operated by receiving a signal through the button 161 provided on the bucket joystick 160.

In other words, the button 161 is connected to the switch of the bucket joystick 160, so that a signal for performing the 4^{th} spool option operation or a signal for performing bucket dusting operation is input through the switch of the bucket joystick 160 by the button 161.

Therefore, when performing the bucket dusting, it is necessary to prevent an error in the input signal. The instrument panel 150 displays a pop-up that allows selection of whether to activate or deactivate the 4^{th} spool option, and the operator selects activation or deactivation of the 4^{th} spool option through the instrument panel 150.

The instrument panel 150 transmits the operator's selection for the 4^{th} spool option to the vehicle control unit 120.

As described above, the bucket joystick 160 is provided with the button 161. The button 161 transmits a signal to perform the 4^{th} spool option operation when the 4^{th} spool option is activated, and switches to a standby state so that the bucket dusting operation is performed when the 4^{th} spool option is deactivated..

Meanwhile, the instrument panel 150 displays a pop-up notifying that the vehicle has been switched to the standby state in which bucket dusting operation can be performed.

Meanwhile, the work system 100 of the construction machine further includes an arm position detection unit 170, a bucket position detection unit 180, and a transmission control unit 190.

The arm position detection unit 170 detects the position of the arm 20 connecting the bucket 10 and the vehicle (not shown). The value detected by the arm position detection unit 170 is transmitted to the vehicle control unit 120.

The position of the arm 20 detected by the arm position detection unit 170 is the position of the arm 20 with respect to the ground. In the present embodiment, specifically, a height of a hinge point H, where the arm 20 and the bucket 10 are hinged, relative to the ground is detected.

The bucket position detection unit 180 detects the position of the bucket 10. The value detected by the bucket position detection unit 180 is transmitted to the vehicle control unit 120. The position of the bucket 10 is detected through an angle formed by an imaginary horizontal plane A passing through the hinge point H and an imaginary plane B passing through the center C of the length of the inlet of the bucket 10 and the hinge point H. That is, the bucket position detection unit 180 detects the angle of the bucket 10.

The transmission control unit 190 is provided as a vehicle speed sensor and detects the speed of the vehicle (not shown) and transmits it to the vehicle control unit 120. The vehicle control unit 120 compares the speed value of the vehicle (not shown) received from the transmission control unit 190 with a preset speed.

After the vehicle (not shown) is switched to the bucket dusting standby state, when the position of the arm 20 detected by the arm position detection unit 170 is at or above a first set position, the position of the bucket 10 detected by the bucket position detection unit 180 is at or below a second set position, the bucket joystick 160 is in a neutral state, and the speed of the vehicle (not shown) is equal to or less than the set speed, the vehicle control unit 120 performs bucket dusting and terminates it when a signal longer than a set time is input from the switch of the bucket joystick 160.

At this time, when the position of the bucket 10 detected by the bucket position detection unit 180 falls within a range below the second set position and above a third set position, the vehicle control unit 120 applies a set output value such that the bucket 10 alternately performs dump operation and crowd operation a set number of times at intervals of a set time. In this case, the second setting position or the third setting position may be set by a user.

When the bucket 10 is positioned at or below the third setting position, which is lower than the second setting position, the vehicle control unit 120 applies a set output value such that the bucket 10 performs the crowd operation when a signal for the set time or longer is input from the switch of the bucket joystick 160.

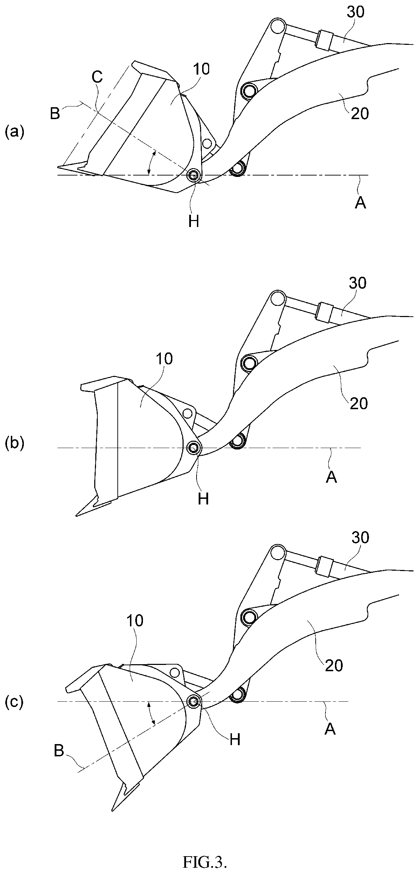

FIGS. 3A to 3C show various embodiments for the position of the bucket 10. FIG. 2A shows the bucket 10 in a fully crowded state, and FIG. 2C shows the bucket 10 in a fully dumped state. FIG. 2B shows the bucket 10 in an intermediate state between full crowd and full dump.

As will be described in more detail later, the state in which the position of the bucket 10 is between full crowd and full dump is the second setting position, which is a reference for performing the bucket dusting.

Meanwhile, the control system for a construction machine according to another embodiment of the present disclosure may include the vehicle control unit 120, the bucket joystick 160, the bucket position detection unit 180, and the transmission control unit 190.

The vehicle control unit 120 of the control system for construction equipment according to this embodiment receives signals from the bucket joystick 160, the bucket position detection unit 180, and the transmission control unit 190.

In addition, when the bucket joystick 160 is in the neutral state and the speed of the vehicle (not shown) is less than or equal to the set speed, the vehicle control unit 120 determines whether to perform bucket dusting according to the position of the bucket 10 when a signal for the set time or longer is input from the switch of the bucket joystick 160.

That is, in the present embodiment, when an operator wants to perform bucket dusting at a time point when bucket dusting is necessary, it is possible to determine whether to perform bucket dusting only based on the location conditions of the bucket 10.

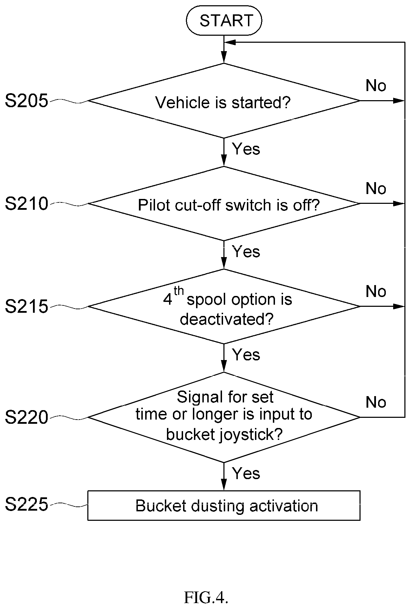

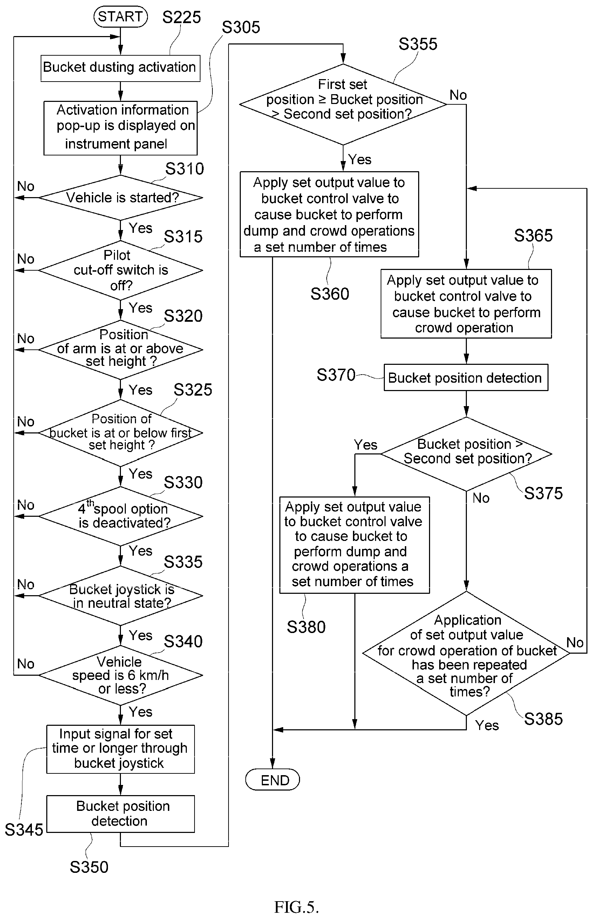

Hereinafter, a control method for bucket dusting using the control system for the construction machine will be described with reference to FIGS. 4 and 5.

When work using a wheel loader is completed, a bucket dusting operation is necessary to shake off any residue remaining in the bucket.

The vehicle control unit 120 sequentially receives information from the engine control unit 130, the pilot cut-off switch 140, the instrument panel 150, and the bucket joystick 160.

In addition, when the information transmitted from the engine control unit 130, the pilot cut-off switch 140, the instrument panel 150, and the bucket joystick 160 satisfies set conditions, the vehicle control unit 120 activates bucket dusting to a state in which the bucket dusting operation can proceed.

Hereinafter, the control process until the vehicle control unit 120 activates bucket dusting will first be described.

Referring to FIG. 4, the vehicle control unit 120 receives information from the engine control unit 130 as to whether the vehicle (not shown) of the construction machine is in a started state (Step S205).

When the vehicle (not shown) is in the started state, the vehicle control unit 120 receives information about whether the pilot cut-off switch 140 is on or off (Step S210). In order to perform the bucket dusting operation, the pilot cut-off switch 140 needs to be turned off to enter the pilot operation state.

Next, the vehicle control unit 120 receives the status of the 4^{th} spool option from the instrument panel 150 (Step S215). The operator operates the bucket joystick 160 to select the 4^{th} spool option to be deactivated through the instrument panel 150. In addition, the instrument panel 150 notifies the vehicle control unit 120 that the 4^{th} spool option is deactivated.

Finally, the vehicle control unit 120 receives an input signal from the switch of the bucket joystick 160 (Step S220). The vehicle control unit 120 receives a signal from the button 161 provided on the bucket joystick 160. However, in order to remove incorrect signal input or noise, a signal for a set time or longer is received from the switch of the bucket joystick 160 by pressing the button 161 for the set time or longer.

As described above, when all the conditions of steps S205 to S220 are satisfied, the vehicle control unit 120 determines that there is an intention to perform a bucket dusting operation on the construction machine and activates the bucket dusting (Step S225).

Meanwhile, in the above description, steps S205 to S220 are sequentially performed as an example, but the present disclosure is not limited thereto. The steps S205 to S220 may be performed simultaneously, and when the steps S205 to S220 are performed simultaneously, if any one step does not meet the set condition, the bucket dusting operation is not activated.

When the bucket dusting is activated, a pop-up notifying the activation of the bucket dusting is displayed on the instrument panel 150 (Step S305). That is, even if bucket dusting is activated in the construction machine, the bucket dusting operation is not performed immediately, but is in a standby state for performing the bucket dusting operation, and the instrument panel 150 informs the operator that bucket dusting can be performed at any time.

In addition, at this time, information on attachments that cannot be used in the construction machine may be provided.

When a pop-up indicating activation of bucket dusting is displayed on the instrument panel 150, the operator can press the button 161 of the bucket joystick 160 to perform the bucket dusting (Step S345).

However, before the operator transmits the input signal through the button 161, the vehicle control unit 120 performs an additional verification process to ensure that the bucket dusting can be performed.

The verification process of the vehicle control unit 120 is as follows.

The vehicle control unit 120 verifies whether the vehicle (not shown) is started (Step S310), whether the pilot cut-off switch 140 is off (step S315), whether the position of the arm 30 is at or above the first set position (Step S320), whether the height of the bucket 10 is at or below the second set position (Step S325), whether the 4^{th} spool option is in the deactivated state (Step S330), whether the bucket joystick 160 is in the neutral state (Step S335), and whether the speed of the vehicle (non-motorized) is less than or equal to the set speed (Step S340).

In other words, only when it is verified that the vehicle is in the started state, the pilot cut-off switch 140 is in the off state, the position of the arm 30 is at or above the first set position, the height of the bucket 10 is at or below the second set position, the 4^{th} spool option is the deactivated state, the bucket joystick 160 is in the neutral state, and the vehicle speed of the vehicle is less than or equal to the set speed, the vehicle control unit 120 actually perform the bucket dusting.

If the verification condition is not satisfied in any one of steps S310 to S340, the process returns to the state before the bucket dusting is activated.

During the verification process, the position of the arm 20 needs to be at or above the first set position. This prevents the bucket from colliding with surrounding structures when the bucket dusting operation is performed. The first setting position is an intermediate height between when the hinge point H is at the lowest height and at the highest height relative to the ground.

Meanwhile, the position of the bucket 10 needs to be at or below the second set position. The second setting position is an intermediate position between when the bucket 10 is fully crowded and when it is fully dumped. If the bucket 10 is positioned at a height higher than the second setting position, an accident may occur when residue remaining in the bucket 10 falls during bucket dusting. Therefore, in order to prevent such a problem, bucket dusting is performed only when the bucket 10 is positioned at a height at or below the second setting position.

During the verification process, the bucket joystick 160 needs to be in the neutral state. If the bucket joystick 160 is not in the neutral state, the manipulation of the bucket 160 and the bucket dusting operation may conflict, resulting in a system error. Therefore, to prevent such a problem, the bucket joystick 160 needs to be in the neutral state.

The vehicle speed of the vehicle (not shown) needs to be equal to or less than the set speed. In the present embodiment, the bucket dusting operation is performed only when the vehicle speed of the vehicle (not shown) is 6 km/h or less. If the vehicle speed of the vehicle (not shown) is too fast, the wheel loader may shake while the bucket dusting operation is performed, so the vehicle speed is limited to prevent the problem from occurring.

Referring to FIG. 5, in the present embodiment, the processes that the vehicle control unit 120 verifies whether the vehicle (not shown) is in the started state (Step S310), whether the pilot cut-off switch 140 is in the off state (Step S315), whether the position of the arm 30 is at or above the set height (Step S320), whether the height of the bucket 10 is at or below the first set position (Step S325), whether the 4^{th} spool option is deactivated (Step S330), whether the bucket joystick 160 is in the neutral state (Step S335), and whether the vehicle speed of the vehicle (not shown) is less than or equal to the set speed (step S340) are illustrated to proceed sequentially.

However, this is limited to the present embodiment, and the processes that the vehicle control unit 120 verifies whether the vehicle (not shown) is in the started state (Step S310), whether the pilot cut-off switch 140 is in the off state (Step S315), whether the position of the arm 30 is at or above the set height (Step S320), whether the height of the bucket 10 is at or below the first set position (Step S325), whether the 4^{th} spool option is deactivated (Step S330), whether the bucket joystick 160 is in the neutral state (Step S335), and whether the vehicle speed of the vehicle (not shown) is less than or equal to the set speed (Step S340) may proceed simultaneously.

When the vehicle control unit 120 has completed all of the verifications up to step S340, the operator inputs a signal by pressing the button 161 of the bucket joystick 160 for a set time or longer (Step S345). The reason for inputting a signal by pressing the button 161 for the set time or longer is to prevent other noise signals from being input as a signal by the button 161 of the bucket joystick 160 or to avoid malfunctions due to signals from the button 161 being manipulated incorrectly in situations that the operator does not want.

Upon receiving a signal for the set time or longer from the button 161, the vehicle control unit 120 detects the position of the bucket 10 through the bucket position detection unit 180 (Step S355).

Although the position of the bucket 10 is confirmed during the verification process, it is necessary to accurately detect the position of the bucket 10 to accurately perform the bucket dusting operation.

As described above, the position of the bucket 10 may be detected through the angle between the imaginary horizontal plane A and the imaginary plane B. The vehicle control unit 120 receives the value detected by the bucket position detection unit 180 and determines whether the position of the bucket 10 falls within the range below the second set position and above the third set position.

When the position of the bucket 10 falls within the range below the second set position and above the third set position, the vehicle control unit 120 applies a set output value to the bucket control valve 110.

In this case, the set output value is applied to the bucket control valve 110 the set number of times at intervals of the set time. In addition, the set output value is alternately applied to the dump side and the cloud side of the bucket control valve 110 so that the dump operation and the cloud operation of the bucket 10 can be performed alternately.

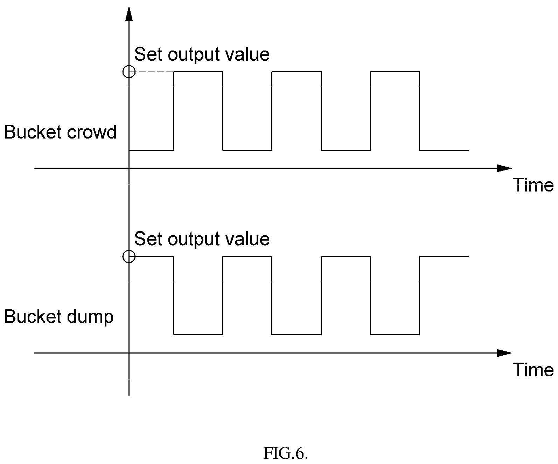

FIG. 6 shows a graph of the set output value being applied to the bucket control valve 110. Referring to FIG. 6, when the set output value is applied to the dump side of the bucket control valve 110, the set output value is not applied to the crowd side of the bucket control valve 110.

In this way, when the set output value is applied to the bucket control valve 110 the set number of times at intervals of the set time, the bucket 10 repeats the dump operation and the crowd operation the set number of times to complete bucket dusting and the work is completed.

On the other hand, when the position of the bucket 10 detected by the bucket position detection unit 180 is at or below the third set position, the vehicle control unit 120 applies a set output value to the bucket control valve 110 to perform only the crowd operation of the bucket 10 (Step S365).

When the position of the bucket 10 is at or below the third set position, the bucket 10 is almost close to the position when it is fully dumped. Therefore, if the bucket 10 performs the dump operation for bucket dusting, there is a risk of collision with surrounding vehicle structures. In order to prevent this risk, if the bucket 10 is at or below the third set position, bucket dusting can be performed only with the crowd operation.

In this case, the vehicle control unit 120 applies the set output value to the bucket control valve 110 only once so that the crowd operation of the bucket 10 is performed only once.

Since the position of the bucket 10 may change slightly after the crowd operation, this is to provide an opportunity for the bucket dusting operation to be completed when the position of the bucket 10 changes.

Therefore, after the crowd operation of the bucket 10 is performed once, the position of the bucket 10 is detected (Step S370).

The vehicle control unit 120 again determines whether the position of the bucket 10 detected by the bucket position detection unit 180 in step S370 has changed to fall within the range below the second set position and above the second set position, or remains at or below the second set position (Step S375).

When the position of the bucket 10 has changed to fall within the range below the second set position and above the third set position in step S375, the vehicle control unit 120 applies the set output value to the bucket control valve 110 so that the bucket 10 can perform bucket dusting by repeating the dump and crowd operations (Step S380). In this case, similarly to step S360, the application of the set output value to the bucket control valve 110 is performed a set number of times per set time to cause the bucket 10 to repeat the dump and crowd operations the set number of times to complete and terminate the bucket dusting.

Meanwhile, in step S375, when the position of the bucket 10 is still at or below the third set position, the vehicle control unit 120 checks whether the application of the set output value for the crowd operation of the bucket 10 has been repeated a set number of times (Step S385).

The purpose of the present disclosure is to automatically shut down bucket dusting after completing the bucket dusting for only a preset condition when a signal is input from the button 161 of the bucket joystick 160 by the operator when residue remains in the bucket 10. Therefore, in order to prevent the bucket dusting from being repeated more than the set conditions (number of times) even when the bucket 10 performs bucket dusting only with the crowd operation since the position of the bucket 10 is at or below the third set position, the step S385 is performed to prevent the bucket 10 from repeating the bucket dusting more than the set number of times.

If it is confirmed through step S385 that the set output value has been repeatedly applied the set number of times to the crowd side of the bucket control valve 110, the vehicle control unit 120 determines that bucket dusting is complete and terminates the operation.

If it is confirmed through step S385 that the set output value has not been repeatedly applied the set number of times to the crowd side of the bucket control valve 110, steps S365 to S375 are repeated.

Accordingly, even when the position of the bucket 10 does not change significantly and bucket dusting is performed by repeating only the crowd operation, if it is confirmed that the bucket dusting has been repeated the set number of times, the bucket dusting is completed and the operation is terminated.

Although the embodiments of the present disclosure have been described above with reference to the accompanying drawings, those skilled in the art to which the present disclosure pertains will understand that the present disclosure may be practiced in other specific forms without changing its technical idea or essential features.

Therefore, the embodiments described above should be understood in all respects as illustrative and not restrictive, the scope of the present disclosure is defined by the following claims, and all changes or modifications derived from the meaning and scope of the claims and their equivalents should be construed as being included in the scope of the present disclosure.

## Claims

1. A control system (100) for a construction machine, comprising:
a bucket control valve (110) for controlling supply of hydraulic oil to a bucket cylinder (30) provided to operate a bucket (10);
a vehicle control unit (120) that applies a current value to the bucket control valve to control the bucket control valve;
a bucket joystick (160) that transmits a bucket control signal to the vehicle control unit and includes a switch for actuating the bucket or a device other than the bucket;
an arm position detection unit (170) that detects a position of an arm connecting the bucket and a vehicle and transmits the position of the arm to the vehicle control unit; and
a bucket position detection unit (180) that detects a position of the bucket and transmits the position of the bucket to the vehicle control unit,
wherein the vehicle control unit performs bucket dusting when receiving a specific signal from the switch in a state in which the position of the arm is at or above a first set position, the position of the bucket is at or below a second set position, and the bucket joystick is in a neutral state.

2. The control system of claim 1, wherein before performing the bucket dusting, the vehicle control unit switches the vehicle to a standby state in which the bucket dusting is practicable when receiving the specific signal from the switch.

3. The control system of claim 1, further comprising a pilot cut-off switch (140) for controlling cut-off of pilot oil pressure that controls driving or operation of the vehicle,
wherein the vehicle control unit switches the vehicle to a standby state in which the bucket dusting is practicable only when the pilot cut-off switch is in an off state.

4. The control system of claim 1, wherein the vehicle control unit (120) switches the vehicle to a standby state in which the bucket dusting is practicable only when function of the switch that drives the device other than the bucket is in a deactivated state.

5. The control system of claim 1, further comprising an instrument panel (150) that displays a pop-up notifying that the vehicle has been switched to a standby state in which the bucket dusting is practicable.

6. The control system of claim 1, further comprising a vehicle speed sensor that detects a speed of the vehicle and transmits the speed of the vehicle to the vehicle control unit,
wherein the vehicle control unit performs the bucket dusting upon receiving the specific signal from the switch when the speed of the vehicle is equal to or less than a set speed.

7. The control system of claim 1, wherein when the bucket (10) is positioned within a range below the second set position and above a third set position, the vehicle control unit performs the bucket dusting when receiving the specific signal from the switch.

8. The control system of claim 7, wherein the second set position or the third set position is set by a user.

9. The control system of claim 1, wherein the vehicle control unit (120) applies a set output value to cause the bucket performs a crowd operation when the bucket is positioned at or below a third set position lower than the second set position.

10. A control method of a control system for a construction machine, comprising:
receiving status information of a pilot cut-off switch; and
receiving a specific signal from a bucket joystick,
wherein a vehicle is switched to a standby state in which bucket dusting is practicable when the pilot cut-off switch is in an off state and the specific signal transmitted by the bucket joystick is input.

11. The control method of claim 10, further comprising a verification step for performing the bucket dusting when the vehicle is switched to the standby state,
wherein the verification step for performing the bucket dusting includes:
performing the bucket dusting according to a position of a bucket when a position of an arm of the construction machine is at or above a first set position, the position of the bucket is at or below a second set position, the bucket joystick is in a neutral state, and a speed of the vehicle is equal to or less than a set speed.

12. The control method of claim 11, wherein the position of the bucket is detected before the performing of the bucket dusting, and
wherein the bucket alternately performs dump operation and crowd operation a set number of times at intervals of a set time when the bucket is positioned within a range below the second set position and above a third set position.

13. The control method of claim 12, wherein the position of the bucket is detected before the performing of the bucket dusting, and
wherein the bucket performs the crowd operation when the bucket is positioned at or below the third set position.

14. The control method of claim 13, wherein the position of the bucket is detected after the bucket performs the crowd operation, and
wherein the bucket alternately performs the dump operation and the crowd operation a set number of times at intervals of a set time when it is confirmed that the position of the bucket has changed to fall within the range below the second set position and above the third set position.

15. The control method of claim 13, wherein the position of the bucket is detected after the bucket performs the crowd operation, and
wherein the control method further comprises determining whether the crowd operation has been repeated a set number of times when it is confirmed that the position of the bucket is maintained at or below the third set position.
